# EUROPÄISCHE PATENTANMELDUNG

(11) **EP 2 916 182 A1**
(43) Veröffentlichungstag der Anmeldung: **09.09.2015**
(21) Anmeldenummer: 14003996.7
(22) Anmeldetag: 26.11.2014
(51) Int. Cl.: G05B 9/03, G05B 19/042

(54) **SICHERHEITSSTEUERMODUL UND STEUERUNGSEINRICHTUNG FÜR EINE FLUIDISCH ANTREIBBARE BEARBEITUNGSMASCHINE**

(30) Priorität: 15.01.2014 DE 102014000283
(71) Anmelder: FESTO AG & Co. KG, 73734 Esslingen (DE)
(72) Erfinder: Gehrke, Martin, 71384 Weinstadt (DE); Deichert, Helmut, 71336 Waiblingen (DE); Maier, martin, 73760 Ostfildern (DE)
(74) Vertreter: Patentanwälte Magenbauer & Kollegen Partnerschaft mbB

(57) **Zusammenfassung**

Die Erfindung betrifft ein Sicherheitssteuermodul zur sicheren Abschaltung einer Last (52, 62), mit einem Steuereingang (49) zur Einkopplung wenigstens eines Steuersignals, mit einer ersten Steuerung (47, 48) zur Bereitstellung eines ersten elektrischen Schaltsignals an ein erstes Schaltmittel (50, 61), mit einem ersten Schaltmittel (50, 61) zur Beeinflussung eines elektrischen Widerstands eines ersten Leitungspfads (54, 66) zu einem ersten Lastanschluss, mit einer zweiten Steuerung (46) zur Bereitstellung eines zweiten elektrischen Schaltsignals an ein zweites Schaltmittel (56), mit einem zweiten Schaltmittel (56) zur Beeinflussung eines elektrischen Widerstands eines zweiten Leitungspfads (68) zu einem zweiten Lastanschluss (53), wobei die zweite Steuerung (46) ein Diagnosemittel zur Ermittlung einer Fehlfunktion des ersten Schaltmittels (50, 61) und/oder des zweiten Schaltmittels (56) und zur Bereitstellung wenigstens eines Schaltsignals an wenigstens ein Schaltmittel (50, 56, 61) bei Vorliegen einer Fehlfunktion umfasst, um eine Abschaltung der Last (52, 62) durch Auftrennen wenigstens eines Leitungspfads (54, 55) zu bewirken.

## Beschreibung

Die Erfindung betrifft ein Sicherheitssteuermodul zur sicheren Abschaltung einer elektrisch ansteuerbaren Last, insbesondere eines Fluidventils, sowie eine Steuerungseinrichtung für eine fluidisch antreibbare Bearbeitungsmaschine.

Aus der DE 10 2012 001 615 A1 ist eine Modulanordnung mit einer Anzahl von in einer Reihe angeordneten Reihenmodulen bekannt, wobei die Reihenmodule wenigstens teilweise als Ausgangsmodule zum Ansteuern von Aktoren ausgebildet sind. Zumindest ein Reihenmodul ist als Sicherheitsmodul ausgebildet, das mit wenigstens einem zugeordneten Ausgangsmodul ein sicheres Segment bildet. Das Sicherheitsmodul umfasst eine Anzahl schaltbarer Ausgänge zur Ansteuerung einer Anzahl zugeordneter Ausgangsmodule und wenigstens eine erste Sicherheitsschaltvorrichtung. Die Sicherheitsschaltvorrichtung ist dazu ausgebildet, auf Ansprechen eines sicheren Steuersignals wenigstens einen zugeordneten schaltbaren Ausgang abzuschalten.

Die Aufgabe der Erfindung besteht darin, ein Sicherheitssteuermodul und eine Steuerungseinrichtung für eine fluidisch antreibbare Bearbeitungsmaschine bereitzustellen, bei denen trotz vereinfachter Ausbauweise eine verbesserte, insbesondere individuelle, Abschaltung von elektrisch ansteuerbaren Lasten, insbesondere Fluidventilen, erfolgen kann.

Diese Aufgabe wird gemäß einem ersten Aspekt für ein Sicherheitssteuermodul der eingangs genannten Art mit den Merkmalen des Anspruchs 1 gelöst.

Hierbei ist vorgesehen, dass das Sicherheitssteuermodul einen Steuereingang für eine Einkopplung wenigstens eines Steuersignals, eine erste Steuerung zur Bereitstellung eines ersten elektrischen Schaltsignals an ein erstes Schaltmittel bei Vorliegen des wenigstens einen Steuersignals, ein erstes Schaltmittel zur Beeinflussung eines elektrischen Widerstands eines ersten Leitungspfads zu einem ersten Lastanschluss zum Anschließen der Last, eine zweite Steuerung zur Bereitstellung eines zweiten elektrischen Schaltsignals an ein zweites Schaltmittel und ein zweites Schaltmittel zur Beeinflussung eines elektrischen Widerstands eines zweiten Leitungspfads zu einem zweiten Lastanschluss zum Anschließen der Last umfasst, wobei die zweite Steuerung ein Diagnosemittel umfasst, das dazu ausgebildet ist, eine Fehlfunktion des ersten Schaltmittels und/oder des zweiten Schaltmittels zu detektieren und bei Vorliegen einer Fehlfunktion wenigstens eines Schaltmittels wenigstens ein Schaltsignal an wenigstens ein Schaltmittel bereitzustellen, um eine Abschaltung der Last durch Auftrennen wenigstens eines Leitungspfads zu bewirken.

Mit Hilfe des Diagnosemittels kann beispielsweise überwacht werden, ob das erste Schaltmittel und/oder das zweite Schaltmittel eine ordnungsgemäße Funktion aufweisen oder ob möglicherweise eine Fehlfunktion vorliegt. Bei Auftreten einer Fehlfunktion ist zur Gefahrenabwehr eine Abschaltung der am Sicherheitssteuermodul angeschlossenen elektrisch ansteuerbaren Last vorgesehen. Vorzugsweise wird das am Steuereingang anzulegende Steuersignal von einer sicherheitsgerichteten Steuerungseinrichtung, insbesondere als sicherheitsgerichtetes Bustelegramm einer sicherheitsgerichteten speicherprogrammierbaren Steuerung (SPS) über ein sicherheitsgerichtetes Feldbusprotokoll, bereitgestellt. Um bei Bereitstellung eines solchen sicherheitsgerichteten Steuersignals auch für den Betrieb der Last ein vorgegebenes Sicherheitsniveau einhalten zu können, muss neben der sicherheitsgerichteten Steuerungseinrichtung und neben dem sicherheitsgerichteten Feldbusprotokoll auch das erfindungsgemäße Sicherheitssteuermodul sicherheitsgerichtet ausgebildet sein. Dies wird insbesondere durch eine Möglichkeit zur Überwachung der Schaltfunktionen des Sicherheitssteuermoduls, wie sie durch das Diagnosemittel bereitgestellt werden, gewährleistet.

Bei der ersten Steuerung und/oder der zweiten Steuerung handelt es sich vorzugsweise jeweils um einen Mikroprozessor, der dazu eingerichtet ist, ein eintreffendes Steuersignal in eine Steuerspannung oder einen Steuerstrom für ein nachgelagertes Schaltmittel umzusetzen. Bei dem Schaltmittel handelt es sich vorzugsweise um einen Halbleiterschalter, der durch Anlegen des als Steuerspannung oder Steuerstrom ausgeprägten Schaltsignals den elektrischen Widerstand des jeweils zugeordneten Leitungspfads beeinflussen kann. Dadurch wird ein elektrischer Energiefluss zu der elektrisch ansteuerbaren Last derart beeinflusst, dass die Last zwischen zwei voneinander unterschiedlichen Zuständen, beispielsweise zwischen einem stromlosen Ruhezustand und einem bestromten Funktionszustand, umgeschaltet werden kann.

Exemplarisch handelt es sich bei der elektrisch ansteuerbaren Last um eine Magnetspule eines Fluidventils, das als Schaltventil ausgebildet ist, um seinerseits einen Fluidstrom, insbesondere einen Druckluftstrom, zu einem Aktor zu beeinflussen. Durch eine Umschaltung wenigstens eines der zumindest zwei Schaltmittel des Sicherheitssteuermoduls aus einem leitenden Zustand in einen Sperrzustand wird ein elektrischer Energiefluss an die Last unterbrochen. Unter der Voraussetzung einer geeigneten elektromechanischen Konstruktion gelangt die Last dadurch in einen Abschaltzustand, in dem keine weitere Fluidzufuhr an einen angeschlossenen Aktor stattfindet, wodurch der angeschlossene Aktor zumindest partiell in einen energiefreien, sicheren Zustand gebracht werden kann.

Bei dem Diagnosemittel handelt es sich vorzugsweise um eine Sicherheits-Abschaltlogik, die vorzugsweise als integrierter Schaltkreis ausgebildet ist und die beispielsweise durch Vergleich von elektrischen Potenzialen vor und nach den zu überprüfenden Schaltmitteln oder durch Vergleich von elektrischen Schaltsignalen der Steuerungen eine Fehlererkennung und eine daraus resultierende selbstständige Abschaltung wenigstens eines zugeordneten Schaltmittels bei Auftreten einer Fehlfunktion bewirken kann.

Vorteilhafte Weiterbildungen der Erfindung sind Gegenstand der Unteransprüche.

Zweckmäßig ist es, wenn das Diagnosemittel mit einem Ausgangsanschluss der ersten Steuerung und mit dem ersten Lastanschluss verbunden ist, um eine Fehlfunktion des ersten Schaltmittels bei Ermittlung einer vorgebbaren Signaldifferenz zwischen dem Ausgangsanschluss und dem ersten Lastanschluss zu detektieren. Hierbei dient das Diagnosemittel zur Überprüfung der Funktion des ersten Schaltmittels, das beispielsweise durch Verschleiß oder Defekt entweder ohne Vorliegen eines Steuersignals in einem stets leitenden Zustand verbleibt oder trotz vorliegendem Steuersignal einen stets nichtleitenden Zustand einnimmt. Zumindest für den Fall eines stets leitenden Zustands des ersten Schaltmittels kann ein Gefährdungspotenzial von der angeschlossenen Last ausgehen, so dass eine anderweitige Abschaltung der Last erfolgen muss.

Für die Ermittlung der Signaldifferenz kann das Diagnosemittel exemplarisch mit einem XOR-Gatter ausgestattet sein, an dessen Eingängen der Signalpegel bzw. das elektrische Potenzial des Ausgangsanschlusses der ersten Steuerung und der Signalpegel bzw. das elektrische Potenzial des ersten Lastanschlusses gelegt sind. Das Diagnosemittel empfängt vom XOR-Gatter beispielsweise dann einen logischen High-Pegel, wenn die überprüften Signalpegel eine vorgebbare Differenz überschreiten. Dieser Fall tritt beispielsweise dann auf, wenn ohne Vorliegen eines Schaltsignals an das erste Schaltmittel dennoch ein leitender Zustand des ersten Schaltmittels vorliegt, was auf eine Fehlfunktion des ersten Schaltmittels hinweist oder wenn bei Vorliegen eines Schaltsignals kein leitender Zustand des Schaltmittels eingetreten ist. Zumindest im ersten Fall muss dann unter Heranziehung eines weiteren Schaltmittels eine Abschaltung der elektrischen Versorgung der angeschlossenen Last durch das Sicherheitssteuermodul erfolgen. Hierzu kann durch das Diagnosemittel eine entsprechende Ansteuerung des zweiten Schaltmittels erfolgen, das den zweiten Leitungspfad hochohmig macht und somit elektrisch auftrennt, um somit eine weitere Energiezufuhr an die angeschlossene Last zu verhindern.

Bei einer Weiterbildung der Erfindung ist vorgesehen, dass wenigstens eine Steuerung, insbesondere die erste Steuerung, für eine Bereitstellung von Testpulsen an das erste Schaltmittel ausgebildet ist, um unabhängig von einem Schaltzustand des ersten Schaltmittels eine Diagnose der Funktionsfähigkeit des ersten Schaltmittels durch das Diagnosemittel zu ermöglichen. In Abhängigkeit von der technischen Ausgestaltung des Schaltmittels und der angeschlossenen Last kann hierbei ausgenutzt werden, dass die Last typischerweise eine erheblich größere elektrische Trägheit als das Schaltmittel aufweist. Während also ein kurzer Testpuls zu einer Reaktion des Schaltmittels führt, tritt aufgrund der erheblich größeren elektrischen Trägheit der Last keine Zustandsänderung für die Last ein. Dies gilt beispielsweise für den Fall, dass es sich bei der Last um eine Magnetspule und beim Schaltmittel um einen Halbleiterschalter handelt.

Somit kann sowohl bei einem niederohmigen als auch bei einem hochohmigen Schaltzustand des Schaltmittels jeweils eine Änderung des vorherrschenden Schaltzustands des Schaltmittels mit Hilfe eines geeigneten Testpulses vorgenommen werden, um während der Dauer des Testpulses die Funktionsfähigkeit des Schaltmittels überprüfen zu können, ohne dass es angesichts der sehr kurzen Dauer des Testpulses zu einer unerwünschten Änderung des Zustands der angeschlossenen Last kommt.

Die vorzugsweise als Mikrocontroller oder Mikroprozessor ausgebildete Steuerung kann beispielsweise bei hochohmigem, also geöffneten, ersten Schaltmittel als Testpuls ein kurzzeitiges Schaltsignal an das erste Schaltmittel bereitstellen, durch das dieses aus dem hochohmigen in einen kurzzeitigen niederohmigen Schaltzustand gelangt. Während des Testpulses kann dann durch Vergleich der Signalpegel bzw. elektrischen Potenziale am Ausgangsanschluss der Steuerung und am Lastanschluss überprüft werden, ob die gewünschte kurzzeitige Umschaltung des Schaltmittels in den niederohmigen Zustand erfolgt ist.

Befindet sich das Schaltmittel hingegen in einem niederohmigen Zustand, um eine elektrische Versorgung der angeschlossenen Last zu ermöglichen, kann durch die Steuerung ein Testpuls zur kurzzeitigen Abschaltung des ersten Schaltmittels vorgesehen werden, um durch Vergleich der Signalpegel bzw. elektrischen Potenziale am Ausgangsanschluss der Steuerung und am ersten Lastanschluss zu überprüfen, ob während der Dauer des Testpulses die gewünschte Umschaltung des Schaltmittels in einem hochohmigen Zustand erfolgt.

Vorzugsweise wird die Bereitstellung von Testpulsen an das erste Schaltmittel von der jeweiligen Steuerung an das Diagnosemittel mitgeteilt oder vom Diagnosemittel ausgelöst, so dass das Diagnosemittel die jeweils erwartete Änderung des Schaltzustands prüfen kann und bei Nichteintritt der gewünschten Schaltzustandsänderung des ersten Schaltmittels als Reaktion auf die dadurch ermittelte Fehlfunktion eine Abschaltung der Last mit Hilfe des zweiten Schaltmittels durchführen kann.

Vorteilhaft ist es, wenn wenigstens eine Steuerung, insbesondere die zweite Steuerung, für eine Bereitstellung von Testpulsen an das Diagnosemittel ausgebildet ist, um eine Überprüfung der Funktionsfähigkeit des Diagnosemittels und des zweiten Schaltmittels und bei Auftreten eines Fehlerfalls am Diagnosemittel eine Abschaltung des ersten und/oder zweiten Schaltmittels zu ermöglichen. Beispielsweise kann das Diagnosemittel durch einen geeigneten Testpuls gezielt mit einer "falschen" Information über eine Signaldifferenz zwischen dem Ausgangsanschluss der ersten Steuerung und dem ersten Lastanschluss versorgt werden. Mit dieser Information wird dem Diagnosemittel eine tatsächlich nicht vorliegende Signaldifferenz berichtet, um zu überprüfen, ob in diesem Fall wie gewünscht eine Abschaltung der Last durch entsprechende Ansteuerung des zweiten Schaltmittels erfolgt. Vorzugsweise sind die Dauer des Testpulses und die Reaktionsgeschwindigkeit des Diagnosemittels derart aufeinander abgestimmt, dass bei Erzeugung eines Schaltsignals für das zweite Schaltmittel durch das Diagnosemittel oder bei einer tatsächlich aufgrund des Testpulses erfolgenden wunschgemäßen Abschaltung zumindest eines Schaltmittels, insbesondere des zweiten Schaltmittels, keine Beeinträchtigung des Schaltzustands der Last erfolgt. Vorzugsweise wird hierzu die Abschaltung des Schaltmittels, insbesondere des zweiten Schaltmittels, durch das Diagnosemittel am Ende des Testpulses wieder aufgehoben.

Ferner kann bei Bereitstellung eines solchen Testpulses vorgesehen sein, zusätzlich die Reaktion des vom Diagnosemittel bei Eintreffen des Testpulses angesteuerten Schaltmittels, insbesondere des zweiten Schaltmittels, zu überprüfen. Diese Überprüfung wird beispielsweise durch Vergleichen der Signaldifferenz der elektrischen Potenziale vor und nach dem zweiten Schaltmittel durchgeführt und erlaubt somit auch die Überprüfung der Schaltfähigkeit des zweiten Schaltmittels. Sofern sich im Zuge der Aussendung von Testpulsen an das Diagnosemittel herausstellen sollte, dass entweder das Diagnosemittel nicht die gewünschte Reaktion zeigt oder dass trotz korrekter Reaktion des Diagnosemittels das wenigstens eine angesteuerte Schaltmittel nicht den gewünschten Zustandswechsel vollzieht, erfolgt über das Diagnosemittel die Ausgabe eines Fehlersignals. Dieses Fehlersignal kann einerseits ohne Zwischenschaltung einer Steuerung zur Abschaltung des zweiten Schaltmittels führen. Zusätzlich kann durch Zwischenschaltung einer Steuerung eine Abschaltung des ersten Schaltmittels herbeigeführt werden.

Bevorzugt ist vorgesehen, dass der Steuereingang eine Decodiereinrichtung für eine Decodierung eines als Bustelegramm codierten Steuersignals umfasst. Somit kann das Sicherheitssteuermodul in ein Bussystem eines Feldgeräts, insbesondere einer Ventilinsel, die beispielsweise ein internes, insbesondere proprietäres, Bussystem umfasst, eingeschleift werden. Alternativ kann vorgesehen werden, das Sicherheitssteuermodul als eigenständigen Feldbusteilnehmer in ein Feldbussystem einzuschleifen, das von einer übergeordneten Steuerungseinrichtung, insbesondere einer speicherprogrammierbaren Steuerung, koordiniert wird. Besonders vorteilhaft ist es, wenn über das interne Bussystem eines Feldgeräts oder das Feldbussystem sicherheitsgerichtete Bustelegramme übertragen werden, die sich an das Sicherheitssteuermodul richten und für eine Übertragung von sicherheitsrelevanten Informationen auf einem Sicherheitsniveau vorgesehen sind, das höher gewählt ist als ein normales Übertragungsniveau sonstiger Bustelegramme. Hierdurch kann eine sicherheitsgerichtete Kommunikation zwischen der übergeordneten Steuerungseinrichtung und dem wenigsten einen Sicherheitssteuermodul durchgeführt werden.

Bei einer weiteren Ausführungsform der Erfindung ist vorgesehen, dass der Steuereingang einen ersten Eingangsanschluss für eine Einkopplung eines ersten Steuersignals einer übergeordneten Steuerungseinrichtung und einen zweiten Eingangsanschluss für eine Einkopplung eines zweiten, sicherheitsgerichteten Steuersignals, insbesondere eines sicherheitsgerichteten Bustelegramms, von einer Sicherheitseinrichtung umfasst und dass die erste Steuerung zur Bereitstellung des elektrischen Schaltsignals an das erste Schaltmittel bei vorliegen einer vorgebbaren Kombination des ersten Steuersignals und des zweiten Steuersignals ausgebildet ist. Exemplarisch kann vorgesehen sein, dass am ersten Eingangsanschluss des Steuereingangs ein Bustelegramm empfangen werden kann, wie es bei einer konventionell aufgebauten Automatisierungseinrichtung von einer übergeordneten Steuerungseinrichtung, insbesondere einer SPS, an einen normalen Feldbusteilnehmer ausgesandt wird. Dabei ist es nicht zwingend erforderlich, dass an die übergeordnete Steuerungseinrichtung und/oder an das Feldbussystem und/oder an den ersten Eingangsanschluss vorgegebene Sicherheitsanforderungen gestellt werden. Die sicherheitsgerichtete Funktionalität des Sicherheitssteuermoduls wird bei der vorliegenden Ausführungsform zusätzlich zur internen Diagnosefähigkeit durch Bereitstellung eines sicherheitsgerichteten Steuersignals, insbesondere eines sicherheitsgerichteten Bustelegramms, am zweiten Eingangsanschluss des Steuereinganges erzielt. Dieser zweite Steuereingang kann beispielsweise mit einer sicherheitsgerichteten Überwachungseinrichtung wie beispielsweise einem Lichtvorhang oder einer Trittschaltmatte gekoppelt sein, die ein sicherheitsgerichtetes Steuersignal oder Bustelegramm aussenden, sobald ein vorgegebener Sicherheitsbereich von einem Bediener betreten oder von einem Gegenstand verlassen wird. Da es in diesem Fall zu einer sicherheitsgerichteten Abschaltung der elektrisch ansteuerbaren Last kommen soll, die am Sicherheitssteuermodul angeschlossen ist, ist das Sicherheitssteuermodul derart konfiguriert, dass eine Freigabe von elektrischer Energie an die angeschlossene Last nur dann erfolgen kann, wenn eine Kombination einer Funktionsanforderung durch die übergeordnete Steuerungseinrichtung, die als Steuersignal am ersten Eingangsanschluss bereitgestellt wird und einer Erfüllung einer Sicherheitsabfrage, wie sie lediglich bei Nichtvorliegen des sicherheitsgerichteten Steuersignals oder Bustelegramms am zweiten Eingangsanschluss anzunehmen ist, vorliegt. Sobald entweder die über den nicht sicherheitsgerichteten ersten Eingangsanschluss bereitzustellende Funktionsanforderung oder die sicherheitsgerichtete Information am zweiten Eingangsanschluss nicht zur Verfügung steht, ist das Sicherheitssteuermodul dazu eingerichtet, eine Abschaltung der elektrischen Versorgung der angeschlossenen Last durchzuführen, um die Last in einen sicheren Zustand zu bringen.

Die Aufgabe der Erfindung wird gemäß einem zweiten Aspekt durch eine Steuerungseinrichtung für eine fluidisch antreibbare Bearbeitungsmaschine gelöst, wie sie im Anspruch 7 angegeben ist. Die Steuerungseinrichtung umfasst eine Steuerungseinheit zur Bereitstellung wenigstens eines ersten Steuersignals für wenigstens ein Fluidventil, eine Sicherheitseinrichtung zur Überwachung wenigstens einer Sicherheitsfunktion und zur Bereitstellung wenigstens eines zweiten, sicherheitsgerichteten Steuersignals und ein Sicherheitssteuermodul, das zur sicheren Ansteuerung eines elektrisch ansteuerbaren Fluidventils ausgebildet ist und das einen ersten Eingangsanschluss für eine Einkopplung des ersten Steuersignals, einen zweiten Eingangsanschluss für eine Einkopplung des zweiten Steuersignals, eine erste Steuerung zur Bereitstellung eines elektrischen Steuersignals an ein erstes Schaltmittels bei Vorliegen einer vorgebbaren Kombination des ersten Steuersignals und des zweiten Steuersignals und ein erstes Schaltmittel zur Beeinflussung eines elektrischen Widerstands eines ersten Leitungspfads zu einem ersten Lastanschluss zum Anschließen des Fluidventils umfasst.

Dabei umfasst die Bearbeitungsmaschine wenigstens einen fluidisch betreibbaren Aktor, insbesondere einen Pneumatikzylinder, der mit Hilfe des Fluidventils in unterschiedliche Arbeitsstellungen gebracht werden kann und hierbei für einen Bediener und/oder für Gegenstände ein Gefahrenpotenzial darstellt. Dieses Gefahrenpotential erfordert zur Einhaltung gängiger Vorschriften die Bereitstellung einer sicherheitsgerichteten Steuerungseinrichtung, um bei Fehlfunktionen eine zuverlässige Abschaltung der Energieversorgung für diesen Aktor zu gewährleisten. Hierzu ist die Steuerungseinrichtung in zumindest zwei Bereiche aufgeteilt, von denen der erste wahlweise kein näher spezifiziertes Sicherheitsniveau oder nur ein niedriges Sicherheitsniveau aufweist, während der zweite ein den einzuhaltenden Sicherheitsvorschriften entsprechendes zweites Sicherheitsniveau, insbesondere ein hohes Sicherheitsniveau, einhält.

Dem ersten Bereich ist die Steuerungseinheit zuzurechnen, die zur Bereitstellung wenigstens eines ersten Steuersignals für das anzusteuernde Fluidventil ausgebildet ist und dieses Steuersignal in Abhängigkeit von einem Funktionsablauf für die Bearbeitungsmaschine bereitstellt. Dem zweiten Bereich ist eine Sicherheitseinrichtung zur Überwachung wenigstens einer Sicherheitsfunktion zuzurechnen, wobei es sich bei der Sicherheitseinrichtung beispielsweise um einen Lichtvorhang oder um eine Trittschaltmatte handeln kann, die zur Absicherung eines Sicherheitsbereichs um die Bearbeitungsmaschine herangezogen werden. Damit kann während eines Betriebs des mit Hilfe des Fluidventils angesteuerten Aktors, währenddessen eine Gefährdung von der Bearbeitungsmaschine für einen Bediener und/oder für Gegenstände ausgehen kann, ein Eindringen eines Bedieners und/oder eines Gegenstands in den Gefährdungsbereich überwacht werden und bei einem solchen Eindringen erfolgt eine sicherheitsgerichtete Abschaltung der Bearbeitungsmaschine. Dementsprechend ist die Sicherheitseinrichtung zur Bereitstellung wenigstens eines zweiten, sicherheitsgerichteten Steuersignals oder Bustelegramms an ein Sicherheitssteuermodul ausgebildet. Das Sicherheitssteuermodul umfasst zwei Eingangsanschlüsse, von denen der erste für eine Kommunikation mit der Steuerungseinheit und der zweite für eine Kommunikation mit der Sicherheitseinrichtung ausgebildet sind. Ferner ist das Sicherheitssteuermodul derart konfiguriert, dass eine Freigabe elektrischer Energie an das Fluidventil nur für den Fall vorgesehen ist, wenn sowohl eine Funktionsanforderung von der Steuerungseinheit in Form des ersten Steuersignals am ersten Eingangsanschluss als auch eine Freigabeinformation von der Sicherheitseinrichtung in Form des zweiten, sicherheitsgerichteten Steuersignals am zweiten Eingangsanschluss vorliegt. Anderenfalls wird innerhalb des Sicherheitssteuermoduls das erste Schaltmittel in Abhängigkeit von dem Schaltsignal, das von der ersten Steuerung bereitgestellt werden soll, abgeschaltet.

Beispielsweise kann es sich bei der vorgebbaren Kombination des ersten Steuersignals und des zweiten Steuersignals um eine UND-Verknüpfung handeln, die nur dann zur Ausgabe eines Schaltsignals an das erste Schaltmittel führt, wenn sowohl das erste Steuersignal als auch das zweite Steuersignal auf einem logischen High-Pegel bereitgestellt werden.

Bei einer Weiterbildung der Steuerungseinrichtung ist vorgesehen, dass mehrere Fluidventile zur Steuerung von Fluidströmen vorgesehen sind, die jeweils einen ersten und einen zweiten elektrischen Leitungspfad aufweisen, wobei den ersten Leitungspfaden der Fluidventile jeweils ein Sicherheitssteuermodul zugeordnet ist und wobei die zweiten Leitungspfade der Fluidventile zu einer Rückleitung zusammengefasst sind, in der ein zweites Schaltmittel eingeschleift ist, das mit einer zweiten Steuerung verbunden ist, die ein Diagnosemittel umfasst, das mit dem jeweiligen zweiten Eingangsanschluss und mit dem jeweiligen ersten Lastanschluss verbunden ist, um eine Fehlfunktion des jeweiligen ersten Schaltmittels zu detektieren und das dazu ausgebildet ist, bei Vorliegen einer Fehlfunktion wenigstens eines der ersten Schaltmittel durch Ansteuerung des zweiten Schaltmittels eine Abschaltung der Last durch Auftrennung der Rückleitung zu bewirken. Grundsätzlich könnte vorgesehen werden, dass bei einer Verwendung mehrerer Fluidventile in einer erfindungsgemäßen Steuerungseinrichtung jedem Fluidventil ein Sicherheitssteuermodul zugeordnet ist, wie es in den Ansprüchen 1 bis 6 beschrieben ist. Dementsprechend wäre jeder anzusteuernden Last wohl ein individuelles erstes Schaltmittel als auch ein individuelles zweites Schaltmittel zugeordnet. Bereits aus ökonomischen Gesichtspunkten ist es jedoch wünschenswert, die Anzahl der Schaltmittel möglichst gering zu halten, so dass bei der Steuerungseinrichtung, wie sie im Anspruch 8 für den Betrieb mehrerer Fluidventile beschrieben ist, jedem der Fluidventile zwar ein individuelles erstes Schaltmittel zugeordnet ist, hingegen für die Rückleitungen der jeweiligen als elektrische Lasten ausgebildeten Fluidventile nur ein gemeinsames zweites Schaltmittel vorgesehen ist, das jedoch bei einer Fehlfunktion wenigstens eines ersten Schaltmittels zu einer Abschaltung sämtlicher angeschlossener Fluidventile führt. Zur Gewährleistung dieser Funktion werden die ersten Schaltmittel der Sicherheitssteuermodule mit Hilfe eines, insbesondere als Sicherheits-Abschaltlogik ausgebildeten, Diagnosemittels überwacht, das mit dem jeweiligen zweiten Eingangsanschluss und mit dem jeweiligen ersten Lastanschluss der zu überwachenden Sicherheitssteuermodule verbunden ist und dadurch bei Auftreten wenigstens einer Signaldifferenz an wenigstens einem ersten Schaltmittel die Abschaltung der zugeordneten Fluidventile durch Abschaltung des zugeordneten zweiten Schaltmittels durchführen kann.

Bei einer vorteilhaften Weiterbildung der Steuerungseinrichtung ist vorgesehen, dass ein erster Lastanschluss eines ersten, zur Ansteuerung genau eines Ventils ausgebildeten Sicherheitssteuermoduls oder einer Steuerung innerhalb eines zur Ansteuerung mehrerer Ventile ausgebildeten Sicherheitssteuermoduls mit einem zweiten Eingangsanschluss eines zweiten, zur Ansteuerung genau eines Ventils ausgebildeten Sicherheitssteuermoduls oder einer weiteren Steuerung innerhalb des zur Ansteuerung mehrerer Ventile ausgebildeten Sicherheitssteuermoduls verbunden ist, um eine vorgebbare Schaltkonfiguration für die jeweils angeschlossenen Fluidventile zu bestimmen. Eine derartige Verschaltung von Sicherheitssteuermodulen einer Steuerungseinrichtung oder von Steuerungen innerhalb eines Sicherheitssteuermoduls ist insbesondere dann vorzusehen, wenn Schaltzustände mehrere Fluidventile voneinander abhängig gemacht werden sollen. Beispielsweise kann es bei Durchführung von Bearbeitungsprozessen oder bei der Bereitstellung von Prozessmedien in einen Prozessreaktor nachteilig sein, wenn mehrere Fluidventile gleichzeitig aktiviert sind. Dementsprechend kann die Steuerungseinrichtung dazu ausgebildet sein, eine gleichzeitige Aktivierung mehrere Fluidventile zu unterbinden. Dies wird exemplarisch unter Beibehaltung eines hohen Sicherheitsniveaus dadurch gewährleistet, dass ein erster Lastanschluss eines ersten Sicherheitssteuermoduls oder einer Steuerung innerhalb des Sicherheitssteuermoduls mit einem zweiten Eingangsanschluss eines zweiten Sicherheitssteuermoduls oder mit einer weiteren Steuerung innerhalb des gleichen Sicherheitssteuermoduls verbunden ist. Bei geeigneter logischer Verschaltung des Lastanschlusses und des Eingangsanschlusses wird beispielsweise bei Anliegen eines logischen High-Signalpegels am ersten Lastanschluss durch Invertierung dieses logischen High-Signalpegels ein logischer Low-Signalpegel an dem zweiten Eingangsanschluss angelegt, so dass ein Schaltvorgang des an das zweite Sicherheitssteuermodul oder an die weitere Steuerung innerhalb des gleichen Sicherheitssteuermoduls angeschlossenen Fluidventils dadurch verhindert wird, dass nicht die gewünschte Kombination von Funktionsanforderung und sicherheitsgerichtetem Eingangssignal am zweiten Sicherheitssteuermodul oder an der weiteren Steuerung vorliegt.

Eine vorteilhafte Ausführungsform der Erfindung ist in der Zeichnung dargestellt. Hierbei zeigt:
- Figur 1: eine schematische Darstellung einer Bearbeitungsmaschine mit einer Steuerungseinrichtung für einen fluidischen Aktor,
- Figur 1a: eine alternative Ausführungsform der Beschaltung der Steuerungseinrichtung und
- Figur 2: eine schematische Darstellung eines Sicherheitssteuermoduls zur sicheren Abschaltung einer elektrisch ansteuerbaren Last.

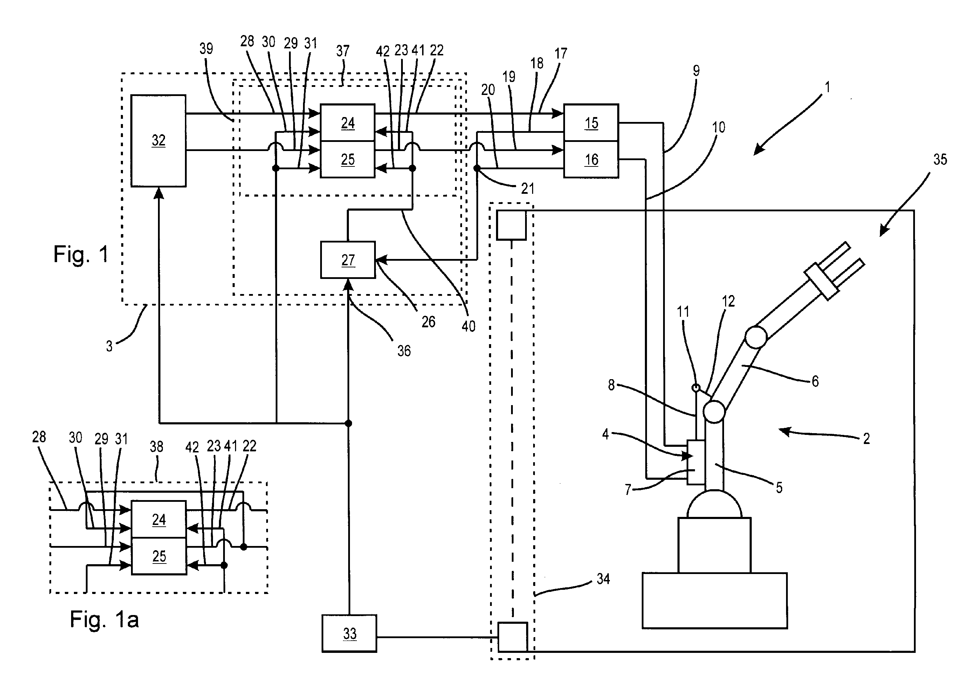

Die in der Figur 1 schematisch dargestellte Bearbeitungsmaschine 1 umfasst einen Industrieroboter 2 zur Bearbeitung nicht näher dargestellter Werkstücke und eine Steuerungseinrichtung 3 zur Steuerung des Industrieroboters 2. Aus Gründen der vereinfachten Darstellung ist lediglich ein einziger Aktor 4 zur Einleitung einer Relativbewegung benachbart angeordneter und gelenkig miteinander verbundener Armteile 5, 6 des Industrieroboters 2 dargestellt. Die übrigen zum Betreiben des Industrieroboters 2 erforderlichen Aktoren können insbesondere in gleicher Weise angesteuert werden, wie dies nachstehend für den Aktor 4 dargelegt wird.

Exemplarisch ist der Aktor 4 als doppelt wirkender Pneumatikzylinder ausgebildet und umfasst ein Zylindergehäuse 7, das am unteren Armteil 5 festgelegt, ist sowie einen linearbeweglich im Zylindergehäuse 7 aufgenommenen und nicht dargestellten Arbeitskolben, der mit einer aus dem Zylindergehäuse 7 herausragenden Kolbenstange 8 gekoppelt ist. Der Arbeitskolben bildet mit dem Zylindergehäuse 7 zwei ebenfalls nicht dargestellte Arbeitsräume, die über Anschlussleitungen 9, 10 in nachstehend näher beschriebener Weise mit druckbeaufschlagtem Fluid versorgt werden können, um eine Linearbewegung des Arbeitskolbens und der damit verbundenen Kolbenstange 8 zu bewirken. Die Kolbenstange 8 ist über ein Schwenkgelenk 11 mit einer Koppelstange 12 verbunden, die ihrerseits drehfest mit dem zweiten Armteil 6 verbunden ist, so dass bei einer Linearbewegung der Kolbenstange 8 eine Schwenkbewegung des zweiten Armteils 6 relativ zum ersten Armteil 5 erfolgt.

Die Anschlussleitungen 9 und 10 sind jeweils an Ausgangsanschlüssen von Fluidventilen 15, 16 angeschlossen, bei denen es sich beispielsweise um Magnetventile, insbesondere um 3/2-Wegeventile, handelt. Die Fluidventile 15, 16 sind eingangsseitig in nicht näher dargestellter Weise mit einer Fluidquelle verbunden und können durch elektrische Ansteuerung in wenigstens zwei unterschiedlich Schaltzustände gebracht werden. In einem ersten Schaltzustand der jeweiligen Fluidventile 15, 16 kann beispielsweise eine Bereitstellung von druckbeaufschlagtem Fluid vom jeweiligen Fluidventil 15, 16 an die jeweils zugeordnete Anschlussleitung 9, 10 vorgesehen sein. In einem zweiten Schaltzustand der jeweiligen Fluidventile 15, 16 kann eine Belüftung der jeweiligen Anschlussleitung 9, 10 vorgesehen sein. Für die elektrische Ansteuerung der Fluidventile 15, 16 sind jeweils zwei elektrische Anschlüsse 17 und 18 bzw. 19 und 20 vorgesehen. Dabei handelt es sich bei den elektrischen Anschlüssen 17 und 19 um Eingangsanschlüsse, an die ein elektrisches Schaltsignal bereitgestellt werden kann, um die gewünschte Schaltfunktion des jeweiligen Fluidventils 15, 16 zu bewirken. Bei den elektrischen Anschlüssen 18 und 20 handelt es sich exemplarisch um die jeweilige Rückleitung, die beispielsweise mit einem Erdungsanschluss 21 verbunden ist. Exemplarisch ist vorgesehen, dass die beiden elektrischen Anschlüsse 18 und 20 an einen gemeinsamen Erdungsanschluss 21 geführt sind und von dort aus in nachstehend näher beschriebener Weise weiter verlaufen, um die jeweiligen Stromkreise zu schließen.

Die ersten elektrischen Anschlüsse 17 und 19 der Fluidventile 15, 16 sind jeweils mit ersten Lastanschlüssen 22, 23 einer ersten Steuerung 24, 25 verbunden. Exemplarisch ist vorgesehen, dass der Erdungsanschluss 21 mit einem zweiten Lastanschluss 26 einer zweiten Steuerung 27 verbunden ist.

Jede der ersten Steuerungen 24, 25 umfasst zum Empfang von Steuersignalen einen ersten Eingangsanschluss 28, 29 sowie einen zweiten Eingangsanschluss 30, 31. Beispielhaft ist vorgesehen, dass die jeweiligen ersten Eingangsanschlüsse 28, 29 mit einer übergeordneten Steuerungseinheit 38, bei der es sich insbesondere um eine speicherprogrammierbare Steuerung (SPS) handeln kann, verbunden sind. Die zweiten Eingangsanschlüsse 30, 31 sind mit einer Sicherheitseinrichtung 33 verbunden, bei der es sich beispielsweise um eine Auswerteeinrichtung eines Lichtvorhangs 34 handeln kann, der zur Absicherung eines Bewegungsraums 35 des Industrieroboters 2 eingesetzt wird.

Die Sicherheitseinrichtung 33 ist zur Bereitstellung eines sicherheitsgerichteten Steuersignals ausgebildet, das sowohl an die zweiten Eingangsanschlüsse 30, 31 der ersten Steuerungen 24, 25 als auch an einen Eingangsanschluss 36 der zweiten Steuerung 27 angeschlossen.

Exemplarisch sind die ersten Steuerungen 24 und 25 so konfiguriert, dass sie lediglich dann ein Schaltsignal an den jeweiligen Lastanschluss 22, 23 zur Betätigung des angeschlossenen Fluidventils 15, 16 bereitstellen können, wenn sowohl am ersten Eingangsanschluss 28 bzw. 29 als auch am jeweiligen zweiten Eingangsanschluss 30, 31 ein vorgebbarer Signalpegel, insbesondere ein logischer High-Signalpegel, anliegt. Dies ist dann der Fall, wenn von der Steuerungseinheit 32 ein entsprechendes Steuersignal an den jeweiligen ersten Eingangsanschluss 28, 29 bereitgestellt wird und wenn gleichzeitig von der Sicherheitseinrichtung 33 ein entsprechendes sicherheitsgerichtetes Steuersignal an den jeweiligen zweiten Eingangsanschluss 30, 31 bereitgestellt wird.

Für eine Betätigung des jeweiligen Fluidventils 15, 16 ist zudem erforderlich, dass am Erdungsanschluss 21 auch tatsächlich ein Erdpotenzial anliegt. Dies wird bei normaler Funktion der Bearbeitungsmaschine 1 dadurch gewährleistet, dass eine elektrische Verbindung zwischen den Steuerungen 24, 25 und dem Erdungsanschluss 21 über die zweite Steuerung 27 vorliegt.

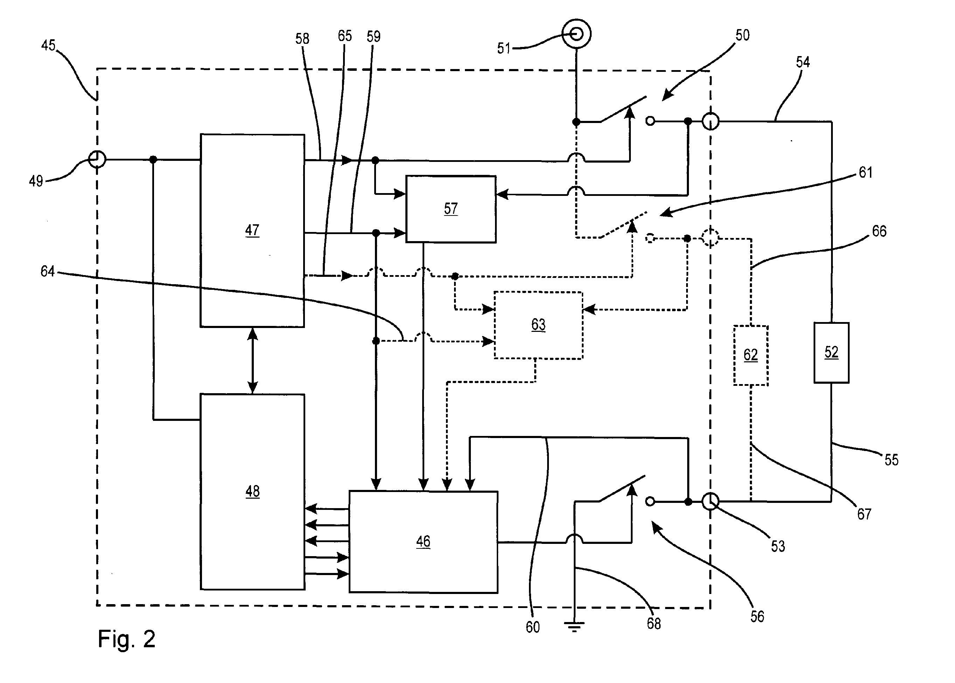

Die zweite Steuerung umfasst ein in Figur 2 näher dargestelltes Schaltmittel 56 sowie eine Sicherheits-Abschaltlogik 46, welche bei Vorliegen von Fehlfunktionen die elektrische Verbindung zwischen den ersten Steuerungen 24, 25 und dem Erdungsanschluss 21 unterbrechen oder zumindest derart hochohmig machen kann, so dass in diesem Fall ein weiterer Energiefluss durch die jeweils zugeordneten Fluidventile 15, 16 unterbunden wird und diese in einen vorgegebenen Schaltzustand, insbesondere einen die Fluidzufuhr an den Aktor 4 unterbrechenden Schaltzustand, gelangen.

Exemplarisch ist vorgesehen, dass die zweite Steuerung 27 ebenfalls mit der Sicherheitseinrichtung 33 gekoppelt ist und bei Unterbrechung des Lichtvorhangs 34 ebenfalls das dadurch ausgesandte sicherheitsgerichtete Steuersignal empfängt, um ggf. die Unterbrechung des elektrischen Leitungspfads zwischen dem Erdungsanschluss 21 und den ersten Steuerungen 24, 25 vorzunehmen. Zum Schließen der Stromkreise für die Fluidventile 15, 16 sind die als Rückleitung dienenden elektrischen Anschlüsse mit dem Erdungsanschluss 21 verbunden, der seinerseits mit der zweiten Steuerung 27 verbunden ist, in der das in der Figur 2 näher dargestellte Schaltmittel zur Freigabe oder Unterbrechung dieses Leitungspfads enthalten ist. Von dort aus verläuft eine Rückleitung 40 bis zu den zweiten Lastanschlüssen 41, 42 der beiden Steuerungen 24, 25.

Die in der Figur 1 dargestellte Steuerungsanordnung 37 kann durch die in der Figur 1a dargestellte Steuerungsanordnung 38 ausgetauscht werden, die sich von der Steuerungsanordnung 37 dadurch unterscheidet, dass das sicherheitsgerichtete Steuersignal der Sicherheitseinrichtung 33 lediglich an den zweiten Eingangsanschluss 31 der ersten Steuerung 25 geführt ist. Der zweite Eingangsanschluss 30 der ersten Steuerung 24 ist hingegen elektrisch mit dem ersten Lastanschluss 23 der Steuerung 25 verbunden. Durch diese Maßnahme wird, unter Voraussetzung einer geeigneten Invertierung des am ersten Lastanschluss 23 ausgegebenen Schaltsignals, eine Blockierung eines Schaltvorgangs für das erste Fluidventil 15 während eines Schaltvorgangs des zweiten Fluidventils 16 gewährleistet. Liegt beispielsweise sowohl am ersten Eingangsanschluss 28 der Steuerung 24 als auch am ersten Eingangsanschluss 29 der Steuerung 25 ein logisches High-Signal an, so führt dies aufgrund der Verarbeitung der jeweiligen Eingangssignale in der Steuerung 25 zur Ausgabe eines Schaltsignals für das Fluidventil 16 am ersten Lastanschluss 23 der Steuerung 25. Bei dem Schaltsignal handelt es sich vorzugsweise ebenfalls um ein logisches Signal mit einem High-Signalpegel, der gemäß der Figur 1a auch am zweiten Eingangsanschluss 30 der Steuerung 24 bereitgestellt wird. Dieser zweite Eingangsanschluss 30 kann beispielsweise als invertierender Eingangsanschluss ausgebildet sein, so dass ein eintreffendes logisches Signal mit High-Signalpegel in der ersten Steuerung 24 in ein logisches Signal mit einem Low-Signalpegel gewandelt wird. Somit führt ein Vorliegen eines logischen High-Signalpegels am ersten Eingangsanschluss 28 der Steuerung 24 nicht zur Freigabe eines Schaltsignals am ersten Lastanschluss 22. Dementsprechend wird durch diese Verschaltung ein Einschalten des ersten Fluidventils 15 ausgeschlossen, wenn das zweite Fluidventil 16 mit einem Schaltsignal versorgt wird.

Abweichend von der Darstellung der Figur 1, bei der eine sogenannte "Interlock"-Schaltung, also eine Verschaltung der beiden Steuerungen 24, 25 zur gegenseitigen Blockierung von Schaltvorgängen vorgesehen ist, kann bei einer nicht dargestellten Ausführungsform vorgesehen werden, dass zwei Sicherheitssteuermodule, die vorzugsweise jeweils nur eine einzige erste Steuerung und jeweils eine zweite Steuerung aufweisen, ebenfalls in der vorstehend genannten Weise zu einer "Interlock-Schaltung verschaltet werden.

Eine derartige Beschaltung ist insbesondere abweichend von dem in der Figur 1 dargestellten Ausführungsbeispiel für einen nicht dargestellten Reaktor von Interesse, bei dem mit Hilfe der Fluidventile eine Zuführung von Prozessmedien in den Reaktor erfolgt und beispielsweise eine zeitgleiche Zuführung mehrerer Prozessmedien nicht vorgenommen werden darf. Das in der Figur 2 dargestellte Sicherheitssteuermodul 45 kann unter Einbeziehung der gestrichelt dargestellten Ventilansteuerung in gleicher Weise zur Ansteuerung der Fluidventile 15, 16 gemäß der Figur 1 eingesetzt werden, wie dies in der Darstellung der Figur 1 durch die Steuerungen 24, 25 und 27 erfolgt.

Das Sicherheitssteuermodul 45 unterscheidet sich von der in Figuren 1 und 1a dargestellten Konfiguration dadurch, dass mehrere Fluidventile von einer Steuerung angesteuert werden können und dass ein Diagnosemittel in Form einer Sicherheits-Abschaltlogik 46 vorgesehen ist, das zur Überprüfung von Schaltfunktionen von Schaltmitteln 50, 56 und gegebenenfalls 61 ausgebildet ist und das eine interne Abschaltung einer Energiezufuhr an die angeschlossenen Lasten 52 und gegebenenfalls 62 bei Aufdeckung von Fehlfunktionen ermöglicht.

Nachstehend soll zunächst auf die in durchgezogener Darstellung in der Figur 2 dargestellten Komponenten Bezug genommen werden, danach erfolgt auch eine Würdigung der zusätzlich in gestrichelter Darstellung vorhandenen weiteren Komponenten.

Das Sicherheitssteuermodul 45 umfasst eine erste, insbesondere als Mikroprozessor oder Mikrocontroller ausgebildete, Recheneinheit 47 und eine in gleicher Weise, vorzugsweise redundant ausgebildete, zweite Recheneinheit 48. Beide Recheneinheiten 47, 48 sind mit einem Steuereingang 49 verbunden, der zum Empfang von sicherheitsgerichteten Steuersignalen oder sicherheitsgerichteten Bustelegrammen ausgebildet ist. Die eintreffenden sicherheitsgerichteten Steuersignale werden an beide Recheneinheiten 47, 48 weitergeleitet und führen dort zur Ausgabe von elektrischen Schaltsignalen, wobei eine gegenseitige Kontrolle der beiden Recheneinheiten 47, 48 vorgesehen ist. Die beiden Recheneinheiten 47, 48 sind für einen bidirektionalen Austausch von Daten und insbesondere von Berechnungsergebnissen ausgebildet, um die gewünschte Redundanz sicherstellen zu können. Die beiden Recheneinheiten 47, 48 entsprechen zumindest im Wesentlichen der ersten Steuerung, wie sie im Zusammenhang mit der Figur 1 beschrieben wurde.

Elektrische Schaltsignale der ersten Recheneinheit 47 werden an ein erstes Schaltmittel 50, bei dem es sich beispielsweise um einen Transistor handeln kann, bereitgestellt. Durch die Bereitstellung eines Schaltsignals an das erste Schaltmittel 50 kann dieses einen elektrischen Leistungsfluss von einer elektrischen Quelle 51 an eine elektrisch betreibbare Last 52, bei der es sich beispielsweise um eine Magnetspule eines Magnetventils handeln kann, bis zu einem Erdpotential freigeben. Dabei ist das erste Schaltmittel 50 in einen ersten elektrischen Leitungspfad 54 der Last 52 eingeschleift. Ferner ist vorgesehen, dass in einen über den Erdungsanschluss 53 bis zum Erdpotential verlaufenden und den internen Leitungspfad 68 umfassenden zweiten Leitungspfad 55 der Last 52 in zweites Schaltmittel 56 eingeschleift ist, das eine Unterbrechung dieses zweiten Leitungspfads 55 im Bereich des internen Leitungspfads 68 ermöglicht und somit eine Abtrennung der Last 52 vom Erdpotenzial vorsehen kann. Dazu kann das zweite Schaltmittel 56 von der Sicherheits-Abschaltlogik 46 mit einem entsprechenden Schaltsignal angesteuert werden. Dementsprechend kann die Sicherheits-Abschaltlogik 46 im Wesentlichen als zweite Steuerung angesehen werden, wie sie in der Figur 1 dargestellt ist.

Für eine Überprüfung der Funktionsfähigkeit des ersten Schaltmittels 50 umfasst die Sicherheits-Abschaltlogik 46 ein erstes Prüfmodul 57, das mit einem Schaltsignalausgang 58 der Recheneinheit 47 und mit dem ersten Leitungspfad 54 verbunden ist. Exemplarisch ist das erste Prüfmodul 57 als XOR-Gatter ausgebildet und liefert ein logisches High-Signal an die Sicherheits-Abschaltlogik 46, wenn eine vorgebbare Signaldifferenz zwischen dem ersten Leitungspfad 54 und dem Schaltsignalausgang 58 vorliegt. Ansonsten liefert das erste Prüfmodul 57 ein logisches Low-Signal an die Sicherheits-Abschaltlogik 46. Exemplarisch ist die Sicherheits-Abschaltlogik 46 derart konfiguriert, dass sie bei Eintreffen eines logischen High-Signalpegels vom ersten Prüfmodul 57 eine Fehlfunktion detektiert und eine Abschaltung des zweiten Schaltmittels 56 durch Bereitstellung eines geeigneten Schaltsignals bewirkt. Eine derartige Abschaltung des zweiten Schaltmittels 56 ist zur Gewährleistung der sicherheitsgerichteten Funktion des Sicherheitssteuermoduls immer dann erforderlich, wenn sich anhand des Prüfergebnisses des ersten Prüfmoduls 57 ergibt, dass eine Fehlfunktion des ersten Schaltmittels 50 vorliegt. Von einer derartigen Fehlfunktion des ersten Schaltmittels 50 ist beispielsweise dann auszugehen, wenn am Schaltsignalausgang 58 ein logisches High-Signal ausgegeben wird, um eine Schaltfunktion des ersten Schaltmittels 50 zu bewirken, jedoch am ersten Leitungspfad 54 kein logisches High-Signal anliegt. In diesem Fall muss davon ausgegangen werden, dass das erste Schaltmittel 50 nicht wie gewünscht die elektrische Verbindung zwischen der elektrischen Quelle 51 und dem ersten Leitungspfad 54 herstellt. Eine zweite Fehlfunktion kann detektiert werden, wenn am Schaltsignalausgang ein logisches Low-Signal ausgegeben wird, während am ersten Leitungspfad 54 ein logisches High-Signal anliegt. In diesem Fall ist davon auszugehen, dass das erste Schaltmittel 50 ohne entsprechendes Schaltsignal dennoch eine elektrische Verbindung zwischen der elektrischen Quelle 51 und dem ersten Leitungspfad 54 freigegeben hat, was beispielsweise durch einen Defekt am ersten Schaltmittel 50 auftreten kann. Auch in diesem Fall ist eine sofortige Abschaltung der elektrischen Last 52 erforderlich, da erkennbar keine Kontrolle über das erste Schaltmittel 50 mehr besteht.

Zusätzlich kann das erste Prüfmodul 57 zur Überprüfung einer Funktionsfähigkeit der Sicherheits-Abschaltlogik 46 und gegebenenfalls der Schaltfähigkeit des zweiten Schaltmittels 56 herangezogen werden. Zu diesem Zweck wird von der Recheneinheit 47 über eine Prüfleitung 59 ein Testpuls sowohl an das erste Prüfmodul 57 als auch an die Sicherheits-Abschaltlogik 46 bereitgestellt. Die zeitliche Dauer dieses Testpulses ist so kurz gewählt, dass keine Beeinflussung des Schaltzustands des an die erste Recheneinheit 47 angeschlossenen ersten Schaltmittels 50 eintritt, um eine Überprüfung der Funktion der Sicherheits-Abschaltlogik 46 ermöglichen. Durch den Testpuls über die Prüfleitung 59 erhält die Sicherheits-Abschaltlogik 46 die "falsche" Information, dass eine Signaldifferenz durch das erste Prüfmodul 57 ermittelt wurde. In diesem Fall führt die Sicherheits-Abschaltlogik 46 eine sofortige Abschaltung des zweiten Schaltmittels 56 herbei.

Dabei ist vorgesehen, die Abschaltung des zweiten Schaltmittels 56 in einem derartigen Fall zumindest kurzzeitig zuzulassen, um in diesem Zuge auch eine Überprüfung der Funktionsfähigkeit des zweiten Schaltmittels 56 zu ermöglichen. Hierzu wird von der Sicherheits-Abschaltlogik 46 angesichts des vom ersten Prüfmodul 57 eintreffenden "falschen" Fehlersignals ein entsprechendes Schaltsignal an das zweite Schaltmittel 56 bereitgestellt und von der Sicherheits-Abschaltlogik 46 in Kenntnis des unmittelbar von der ersten Recheneinheit 47 an die Sicherheits-Abschaltlogik 46 bereitgestellten Testpulses lediglich eine kurzzeitige Unterbrechung des zweiten Leitungspfads 55 durchgeführt. Sofern die Sicherheits-Abschaltlogik 46 diesen Testpuls nicht in unmittelbarer Weise bereitgestellt bekommt, wird eine andauernde Abschaltung des Schaltmittels 56 vorgenommen, da es sich dann um einen tatsächlichen Fehlerfall handelt.

Sofern es innerhalb einer sehr kurzen, vorgebbaren Zeitdauer tatsächlich zu einer Unterbrechung des zweiten Leitungspfads 55 mit Hilfe des zweiten Schaltmittels 56 kommt, was über eine Prüfleitung 60 durch die Sicherheits-Abschaltlogik 46 überprüft werden kann, wird nachfolgend noch innerhalb einer weiteren sehr kurzen Zeitspanne ein weiteres Schaltsignal an das zweite Schaltmittel 56 ausgegeben, um die Unterbrechung des zweiten Leitungspfads 55 aufzuheben. Wird hingegen über die zweite Prüfleitung 60 festgestellt, dass das zweite Schaltmittel 56 trotz entsprechenden Abschaltsignals nicht die gewünschte Unterbrechung des zweiten Leitungspfads 55 herbeiführt, sendet die Sicherheits-Abschaltlogik 46 ein entsprechendes Signal an die zweite Recheneinheit 48, die ihrerseits mit der ersten Recheneinheit 47 kommuniziert, um eine Abschaltung des ersten Schaltmittels 50 für diesen tatsächlichen Fehlerfall zu bewirken.

Die erste Recheneinheit 47 kann auch zur Ansteuerung eines weiteren ersten Schaltmittels 61 vorgesehen sein, das seinerseits zur Bereitstellung elektrischer Energie an eine zweite Last 62 ausgebildet ist. Zur Überwachung des weiteren ersten Schaltmittels 61 ist ein zweites Prüfmodul 63 vorgesehen, das in gleicher Weise wie das erste Prüfmodul 57 über eine zweite Prüfleitung 64 mit der ersten Recheneinheit 47 verbunden ist und einen logischen Signalpegel in Abhängigkeit von einer Signaldifferenz zwischen einem Schaltsignalausgang 65 der ersten Recheneinheit 47 und einem ersten Leitungspfad 66 für die zweite Last 62 ermitteln kann. Die zweite Last 62 ist mit ihrem zweiten Leitungspfad 67 am gleichen Erdungsanschluss 53 angeschlossen wie die erste Last 52.

Bei einer nicht dargestellten Ausführungsform eines Sicherheitssteuermoduls umfasst die erste Recheneinheit 47 noch eine Anzahl weiterer Schaltsignalausgänge zur Bereitstellung von Schaltsignalen an weitere nicht dargestellte Schaltmittel, wobei die von diesem Schaltmitteln anzusteuernden Lasten mit ihrem jeweiligen zweiten Leitungspfad ebenfalls am Erdungsanschluss 53 angeschlossen sind, so dass eine zentrale Abschaltung sämtlicher Lasten mit Hilfe des zweiten Schaltmittels gemäß den vorstehend angeführten Funktionalitäten ermöglicht ist.

Ergänzend kann bei einer ebenfalls nicht dargestellten Ausführungsform des Sicherheitssteuermoduls vorgesehen sein, ein sicherheitsgerichtetes Steuersignal einer Sicherheitseinrichtung an wenigstens eine der Recheneinheiten und zusätzlich an die Sicherheits-Abschaltlogik bereitzustellen, wie dies bereits aus der Figur 1 bekannt ist.

## Patentansprüche

1. Sicherheitssteuermodul zur sicheren Abschaltung einer elektrisch ansteuerbaren Last (52, 62), insbesondere eines Fluidventils, mit einem Steuereingang (49) für eine Einkopplung wenigstens eines Steuersignals, mit einer ersten Steuerung (47, 48) zur Bereitstellung eines ersten elektrischen Schaltsignals an ein erstes Schaltmittel (50, 61) bei Vorliegen des wenigstens einen Steuersignals, mit einem ersten Schaltmittel (50, 61) zur Beeinflussung eines elektrischen Widerstands eines ersten Leitungspfads (54, 66) zu einem ersten Lastanschluss zum Anschließen der Last (52, 62), mit einer zweiten Steuerung (46) zur Bereitstellung eines zweiten elektrischen Schaltsignals an ein zweites Schaltmittel (56), mit einem zweiten Schaltmittel (56) zur Beeinflussung eines elektrischen Widerstands eines zweiten Leitungspfads (68) zu einem zweiten Lastanschluss (53) zum Anschließen der Last (52, 62), wobei die zweite Steuerung (46) ein Diagnosemittel umfasst, das dazu ausgebildet ist, eine Fehlfunktion des ersten Schaltmittels (50, 61) und/oder des zweiten Schaltmittels (56) zu detektieren und bei Vorliegen einer Fehlfunktion wenigstens eines Schaltmittels (50, 56, 61) wenigstens eines Schaltsignals an wenigstens ein Schaltmittel (50, 56, 61) bereitstellt, um eine Abschaltung der Last (52, 62) durch Auftrennen wenigstens eines Leitungspfads (54, 55) zu bewirken.

2. Sicherheitssteuermodul nach Anspruch 1, **dadurch gekennzeichnet, dass** das Diagnosemittel mit einem Ausgangsanschluss (58) der ersten Steuerung (47) und mit dem ersten Lastanschluss (54) verbunden ist, um eine Fehlfunktion des ersten Schaltmittels (50) bei Ermittlung einer vorgebbaren Signaldifferenz zwischen dem Ausgangsanschluss (58) und dem ersten Lastanschluss (54) zu detektieren.

3. Sicherheitssteuermodul nach Anspruch 2, **dadurch gekennzeichnet, dass** wenigstens eine Steuerung (47, 48), insbesondere die erste Steuerung (47), für eine Bereitstellung von Testpulsen an das erste Schaltmittel (50) ausgebildet ist, um unabhängig von einem Schaltzustand des ersten Schaltmittels (50) eine Diagnose der Funktionsfähigkeit des ersten Schaltmittels (50) durch das Diagnosemittel zu ermöglichen.

4. Sicherheitssteuermodul nach Anspruch 1, 2 oder 3, **dadurch gekennzeichnet, dass** wenigstens eine Steuerung (46, 47, 48), insbesondere die erste Steuerung (47, 48), für eine Bereitstellung von Testpulsen an das Diagnosemittel ausgebildet ist, um eine Überprüfung der Funktionsfähigkeit des Diagnosemittels und des zweiten Schaltmittels (56) und bei Auftreten eines Fehlerfalls am Diagnosemittel eine Abschaltung des ersten und/oder zweiten Schaltmittels (50, 56) zu ermöglichen.

5. Sicherheitssteuermodul nach einem der vorhergehenden Ansprüche, **dadurch gekennzeichnet, dass** der Steuereingang (49) eine Decodiereinrichtung für eine Decodierung eines als Bustelegramm codierten Steuersignals umfasst.

6. Sicherheitssteuermodul nach einem der vorhergehenden Ansprüche, **dadurch gekennzeichnet, dass** der Steuereingang einen ersten Eingangsanschluss für eine Einkopplung eines ersten Steuersignals einer übergeordneten Steuerungseinheit und einen zweiten Eingangsanschluss für eine Einkopplung eines zweiten, sicherheitsgerichteten Steuersignals, insbesondere eines sicherheitsgerichteten Bustelegramms, einer Sicherheitseinrichtung umfasst und dass die erste Steuerung zur Bereitstellung des elektrischen Schaltsignals an das erste Schaltmittel bei Vorliegen einer vorgebbaren Kombination des ersten Steuersignals und des zweiten Steuersignals ausgebildet ist.

7. Steuerungseinrichtung für eine fluidisch betreibbare Bearbeitungsmaschine (1), mit einer Steuerungseinheit (32) zur Bereitstellung wenigstens eines ersten Steuersignals für wenigstens ein Fluidventil (15, 16), mit einer Sicherheitseinrichtung (33, 34) zur Überwachung wenigstens einer Sicherheitsfunktion und zur Bereitstellung wenigstens eines zweiten, sicherheitsgerichteten Steuersignals und mit einem Sicherheitssteuermodul (39), das zur sicheren Abschaltung eines elektrisch ansteuerbaren Fluidventils (15, 16) ausgebildet ist und das einen ersten Eingangsanschluss (28, 29) für eine Einkopplung des ersten Steuersignals, einen zweiten Eingangsanschluss (30, 31) für eine Einkopplung des zweiten Steuersignals, eine erste Steuerung (24, 25) zur Bereitstellung eines elektrischen Schaltsignals an ein erstes Schaltmittel bei Vorliegen einer vorgebbaren Kombination des ersten Steuersignals und des zweiten Steuersignals und ein erstes Schaltmittel zur Beeinflussung eines elektrischen Widerstands eines ersten Leitungspfads zu einem ersten Lastanschluss (22, 23) des Fluidventils umfasst.

8. Steuerungseinrichtung nach Anspruch 7, **dadurch gekennzeichnet, dass** mehrere Fluidventile (15, 16) zur Steuerung von Fluidströmen vorgesehen sind, die jeweils einen ersten elektrischen Leitungspfad (17, 19) und einen zweiten elektrischen Leitungspfad (18, 20) aufweisen, wobei den ersten Leitungspfaden (17, 19) der Fluidventile (15, 16) jeweils ein Sicherheitssteuermodul (39) zugeordnet ist und wobei die zweiten Leitungspfade (18, 20) der Fluidventile (15, 16) zu einer Rückleitung zusammengefasst sind, in der ein zweites Schaltmittel eingeschleift ist, das mit einer zweiten Steuerung (27) verbunden ist, die ein Diagnosemittel umfasst, das mit dem jeweiligen zweiten Eingangsanschluss (30, 31) und mit dem jeweiligen ersten Lastanschluss (22, 23) verbunden ist, um eine Fehlfunktion des jeweiligen ersten Schaltmittels zu detektieren und das dazu ausgebildet ist, bei Vorliegen einer Fehlfunktion wenigstens eines der ersten Schaltmittel durch Ansteuerung des zweiten Schaltmittels eine Abschaltung der Fluidventile (15, 16) durch Auftrennen der Rückleitung zu bewirken.
